# EUROPEAN PATENT APPLICATION

(11) **EP 2 075 300 A1**
(43) Date of publication of application: **01.07.2009**
(21) Application number: 07253978.6
(22) Date of filing: 09.10.2007
(51) Int. Cl.: C09K 8/10, C09K 8/20, C09K 8/24, C09K 8/52, C09K 8/86, C09K 8/68

(54) **Wellbore fluid**

(71) Applicant: BP EXPLORATION OPERATING COMPANY LIMITED, Sunbury-on-Thames, Middlesex TW16 7BP (GB)
(72) Inventor: The designation of the inventor has not yet been filed
(74) Representative: Collins, Frances Mary

(57) **Abstract**

An aqueous-based wellbore fluid comprising:
- an aqueous base fluid having a first level of salinity; and
- at least one polymer dissolved in said aqueous base fluid at a concentration of at least 1.0g/l, said polymer (i) having a viscosity average molecular weight in the range of from 20,000 to 900,000; and (ii) having a molecular structure such that the polymer chains dissolved in said wellbore fluid adopt a globular conformation, while in a fluid of a second level of salinity, said second level being a lower level of salinity than said first level, the polymer chains adopt an extended conformation. The fluid of the invention finds utility in method of carrying out a wellbore operation, which includes the steps of:
(a) introducing into a wellbore a novel aqueous-based wellbore fluid according to the invention; (b) allowing a filter-cake including said polymer in globular conformation to form; and subsequently (c) bringing a second fluid into contact with the filter-cake, said second fluid having a level of salinity which is lower than the level of salinity of said aqueous base fluid such that said polymer chains in said filter-cake adopt an extended conformation, thereby increasing the permeability of said filter-cake.

## Description

The present invention relates to aqueous-based wellbore fluids having utility in the construction, repair or treatment of a wellbore, and to the removal of the barrier to fluid flow caused by the filter-cake deposited by the wellbore fluids on or in rock formations penetrated by the wellbore.

Conventionally, the drilling of a well into the earth by rotary drilling techniques, involves the circulation of a drilling fluid from the surface of the earth down a drill string having a drill bit on the lower end thereof and through ports provided in the drill bit to the well bottom and thence back to the surface through the annulus formed about the drill string. The drilling fluid serves to cool the drill bit, to transport drill cuttings to the surface, and to stabilize the wellbore.

Wellbore fluid compositions are flowable systems that are generally thickened to a limited extent. Known wellbore fluids can be assigned to one of the three following classes: wellbore fluids based on oil, which as a rule are used in the form of so-called invert emulsion fluids, and represent preparations of the water-in-oil emulsion type in which the aqueous phase is distributed as a heterogeneous fine dispersion in the continuous oil phase; purely aqueous based wellbore fluids; and aqueous based wellbore fluids of the oil-in-water emulsion type in which the oil phase is distributed as a heterogeneous fine dispersion in a continuous aqueous phase. A disadvantage of wellbore fluids based on oil is that the oil tends to coat the drill cuttings, which creates an environmental problem, especially in offshore drilling operations, when the drill cuttings are discarded. To avoid serious pollution, the oil must be cleaned from the cuttings before they can be dumped. It is difficult and expensive to reduce the oil contamination to currently permitted levels, but even these small amounts of residual oil are ecologically undesirable, and there is pressure to replace oil based wellbore fluids with aqueous based ones. However, the technical properties and attributes of aqueous based fluids are significantly different from those of oil based fluids, and the challenges of developing aqueous based fluids are considerable. The present invention relates to improved aqueous based systems, that is, systems having a continuous aqueous phase, including both purely aqueous based fluids and oil-in-water emulsions.

Wells such as oil, gas, water-production or water injection wells are frequently drilled using water based drilling fluids that contain dispersed solid particles such as barite or clays, and also high molecular weight dissolved polymers for the purposes of imparting raised viscosity and controlling the filtration rate (fluid loss) of the drilling fluid from the wellbore into the surrounding formation. Such polymers include bacterial gums such as xanthan gum and scleroglucan gum, starch and starch derivatives such as crosslinked starch and hydroxypropylated starch, carboxymethyl cellulose, and polyacrylates. When drilling a permeable rock formation such as a hydrocarbon producing formation or an interval intended for water injection (e.g. seawater injection) the high molecular weight water-soluble polymers accumulate in the filter-cake formed on the wellbore wall by a process of entrapment of the relatively large hydrated polymer chains in the very small pore throats between the compacted solid particles in the cake, combined with adsorption of the polymer onto the solid particles. This leads to a very low permeability filter-cake. During drilling, a low-permeability filter-cake fulfils the valuable function of limiting losses of filtrate to the formation, and avoids problems such as differential sticking of the drill-string. Similarly, low-permeability filter-cakes can be employed during completion, workover, lost-circulation control, and hydraulic fracturing or other well treatment operations where it is desirable to reduce the loss of filtrate to the formation.

Unfortunately the low permeability filter-cake can later form a barrier to the production of hydrocarbons or water, or to the injection of seawater, especially if it becomes trapped between the formation and the expanded screens or gravel packs that are commonly used to limit sand invasion into the wellbore. The problem is particularly acute in the case of seawater injection wells because the injected water pressure forces the filter-cake onto the rock surface or compacts it into fissures or other conduits within the rock formation.

Accordingly the industry has employed filter-cake treatment fluids pumped down the well in attempts to degrade the polymers in the filter-cake. Such "breaker" fluids can contain enzymes, oxidising agents or acids aimed at degrading the polymers to form soluble low-viscosity reaction products, thus opening up the filter-cake and increasing its permeability. For example, US 6,143,698 discloses a method for removing filter-cake containing an oxidation-degradable component, preferably a polysaccharide, by contacting the filter-cake with a clear brine containing bromine or bromate generating agents to degrade the polymers within the filter-cake. Unfortunately such treatments are frequently inefficient. For instance the relatively high molecular weight of enzymes (about 60,000) impedes their penetration into the filter-cake. Another problem is that if a portion of the filter-cake is effectively broken, the breaker fluid may then flow into the rock formation leaving the rest of the filter-cake untreated.

There is thus a continuing need for filter-cakes which are initially of low permeability, but which can be made to increase in permeability at a later stage, for example when the well is put into production, or when water injection commences.

US 2006/0157248 describes a well treatment method which involves the use of a well treatment fluid containing an insoluble polyol polymer dispersed therein, depositing the insoluble polymer in the wellbore or an adjacent formation, and thereafter dissolving the polymer by reducing salinity and/or increasing temperature conditions in the environment of the polymer deposit. A drawback of this method is that when the reduced salinity fluid contacts the deposited polyol polymer particles concentrated in the filter-cake, the dissolution process leads to a localized very high concentration of dissolved polymer. High concentrations of polyol polymers such as polyvinyl alcohol are sticky, very high viscosity solutions that are difficult to flush away. The problem is more acute if the pressure in the wellbore is higher than in the formation (as is usual during wellbore operations in order to avoid well flows, kicks or blow-outs). The differential pressure forces the high viscosity polymer solution and semi-dissolved polyol particles into the porous formation creating an internal seal that is difficult to remove. This would also occur if injected seawater were to contact the polyol particle filter-cake. The high pressure of seawater injection would be likely to compact the semi-dissolved polymer particles into pores, fissures, or perforation tunnels forming a persistent seal. If little or no extra water can flow, further dissolution would be inhibited.

The present invention is based upon the realisation that certain dissolved polymers adopt an extended conformation in a relatively low salinity environment, but adopt a globular conformation in higher salinity environments, and that this property can be exploited in the context of wellbore fluids. As used herein, "conformation" refers to the shape or arrangement in three-dimensional space that a dissolved polymer molecule assumes.

Accordingly, the present invention provides an aqueous-based wellbore fluid comprising:
- an aqueous base fluid having a first level of salinity; and
- at least one polymer dissolved in said aqueous base fluid at a concentration of at least 1.0g/l, said polymer (i) having a viscosity average molecular weight in the range of from 20,000 to 900,000; and (ii) having a molecular structure such that the polymer chains dissolved in said wellbore fluid adopt a globular conformation, while in a fluid of a second level of salinity, said second level being a lower level of salinity than said first level, the polymer chains adopt an extended conformation.

The invention also provides a method of carrying out a wellbore operation, which includes the steps of:
(a) introducing into a wellbore an aqueous-based wellbore fluid comprising:
   - an aqueous base fluid having a first level of salinity; and
   - at least one polymer dissolved in said aqueous base fluid at a concentration of at least 1.0g/l, said polymer (i) having a viscosity average molecular weight in the range of from 20,000 to 900,000; and (ii) having a molecular structure such that the polymer chains dissolved in said wellbore fluid adopt a globular conformation, while in a fluid of a second level of salinity, said second level being a lower level of salinity than said first level, the polymer chains adopt an extended conformation;
(b) allowing a filter-cake including said polymer in globular conformation to form; and subsequently
(c) bringing a second fluid into contact with the filter-cake, said second fluid having a level of salinity which is lower than the level of salinity of said aqueous base fluid such that said polymer chains in said filter-cake adopt an extended conformation, thereby increasing the permeability of said filter-cake.

The polymer conformation in a relatively high salinity environment provides fluid loss control during wellbore operations, for example drilling, completion, lost-circulation control, workover, or hydraulic fracturing operations, by entrapment of the polymer molecules having a globular conformation in the pores of the filter-cake. The resulting filter-cake will be of low permeability. Later, on contacting the filter-cake with a relatively low salinity fluid, the higher salinity water phase in the filter-cake is diluted by a process of diffusion or osmosis of water molecules aided by permeation of the relatively low salinity fluid under the differential pressure provided by the hydrostatic head of the fluid in the well. This causes swelling of the filter-cake and unravelling of the polymer chains from the globular conformation to an extended conformation. These flexible, generally linear, extended polymer chains can then align with the direction of the increasing fluid flow and be eluted from the filter-cake, rendering the filter-cake more permeable.

The method of the present invention may be used as part of a number of different wellbore operations. In one preferred method, a well is drilled using a drilling fluid according to the invention; once drilling is completed, the drilling fluid is displaced by a completion fluid having a similar level of salinity; finishing hardware, for example well liners to stabilise the formation, is installed; and finally relatively low salinity fluid, for example seawater, is brought into contact with the filter-cake. Such a process is particularly useful in a seawater injection well, but may also be used in a production well. Contact with the relatively low salinity fluid will generally, by a process of osmosis and/or permeation, cause the filter-cake to swell, and cause the salinity of the liquid in the pores to decrease which promotes unraveling of the polymer molecules. The now-extended polymer molecules align with the direction of flow greatly reducing the effective cross-sectional area compared to the globular conformation. This allows the molecules to flow through the pore network between the particles forming the filter-cake. Thus the previously globular fluid-loss reducing polymer molecules can be eluted from the filter-cake, rapidly increasing its permeability. This facilitates communication between the wellbore and the reservoir.

The relatively low salinity fluid may be injected water (e.g. injected seawater) or produced water. For example, in gas-producing wells, as the gas traverses the formation towards the wellbore, the gas will expand at the reduced pressure near the wellbore causing adiabatic cooling and the condensation of low salinity water from the water-saturated gas phase. This can be used to advantage in the process of the invention. Alternatively a relatively low salinity clean-up fluid, optionally containing additives designed to assist clean-up, may be pumped into the well.

Any suitable polymer having the required properties may be used in a wellbore fluid according to the invention. If desired, two or more of the defined polymers may be present. It is a requirement of the invention that the polymer should be soluble in the wellbore fluid (unlike the polyol polymers of US 2006/0157248, where the polyol used is insoluble in the wellbore fluid). The polymer must be present in the wellbore fluid at a concentration of at least 1.0g/l (at least 0.35 pounds per barrel), preferably at least 2.0g/l (0.7 pounds per barrel).

It is also required that the polymer should have a viscosity average molecular weight of no more than 900,000, preferably no more than 750,000. The minimum molecular weight is 20,000, and the preferred molecular weight is at least 40,000. Typical prior art wellbore fluids often contain higher molecular weight polymers. An advantage of the use of lower molecular weight polymers is that, during initial introduction of wellbore fluid, reduced fluid loss from the wellbore is obtained without unduly increasing the plastic viscosity of the wellbore fluid. Further, when the low molecular weight polymer takes on an extended conformation (on contact with the relatively low salinity fluid) the polymer does not increase the viscosity of that fluid unacceptably.

A number of polymers adopt a globular conformation in relatively high salinity fluids while adopting an extended conformation in relatively low salinity fluids. In a relatively high salinity fluid, the polymer chains coil up, while in a relatively low salinity fluid the polymer chains unravel in a flexible linear manner. To facilitate this process, the polymer is preferably substantially non-crosslinked, and preferably consists of substantially linear chains, i.e. chains with little or no branching.

One preferred type of polymer which may be used in the present invention is derived from substantially unbranched and substantially non-crosslinked polysaccharides, especially cellulose. Suitable polymers of this class are water soluble, hydroxyethylated polysaccharides with viscosity average molecular weights in the range 20,000 to 900,000, preferably 40,000 to 750,000, that optionally contain substituent groups in addition to hydroxyethyl. Cellulose is a straight-chain polysaccharide composed of individual anhydroglucose units which are linked through a 1.4 glycosidic bond. Each anhydroglucose ring carries three OH- groups which are chemically active at positions 2, 3, and 6. Hydroxyethylcellulose is made by adding ethylene oxide (EO) or similar materials onto these hydroxyl groups. The distribution of the substituents introduced onto the polymer chain is largely determined by the relative reactivity of these three hydroxyl groups and that of the new -OH group introduced by the addition of EO.

The relative reactivity constants for ethylene oxide adding onto the positions 2, 3, and 6 are 3.0, 1.0, and 10 respectively. The new hydroxyl terminating the added EO group has a much higher reactivity constant of 20. Hence a first EO molecule is most likely to add to the 6 position, and second and subsequent EO molecules are most likely to add to the most active hydroxyls - those on the growing polyoxyethylene side chains.

Suitable polymer types include hydroxyethylcellulose (HEC), ethylhydroxyethyl cellulose, carboxymethylhydroxyethyl cellulose, hydroxypropylhydroxylethyl cellulose, methylhydroxyethyl cellulose, hydroxyethyl guar and hydroxypropylhydroxyethyl guar.

Hydroxyethylcellulose is especially preferred. This is a linear unbranched polymer with a flexible chain, as exemplified by the low gel strengths, and the low viscosity at low shear rates, of its solutions. This is in contrast to bacterial gum polysaccharides such as xanthan gum, scleroglucan gum and welan gum which exhibit high gel strengths and which are not readily eluted from a filter-cake by low salinity aqueous solutions. The high gel strengths are provided by the rigid-rod double- or triple-helix conformation in solution of these bacterial gums.

In low salinity water the polyoxyethylene chains present in HEC and similar polymers are well hydrated by hydrogen bonding of water molecules to the lone pair of electrons on the oxygen atom in the ether links. The hydrogen bonding decreases and the polymer becomes more dehydrated as the salinity of the solution increases. The polymer then adopts a more condensed globular molecular conformation in solution.

High molecular weight hydroxyethylcellulose polymers have previously been used as additives in water-based drilling or completion fluids for the purpose of providing the increased viscosity needed to sweep cuttings or debris from the hole or to maintain solid particles in suspension. However, the hydroxyethylcellulose polymers which find utility in the present invention are of markedly lower molecular weight than those previously used as additives for drilling or completion fluids. The lower molecular weight is required for the present invention because the extended polymer chains are more readily eluted from the filter-cake and do not unacceptably increase the viscosity of the clean-up fluid on contact with the low salinity clean-up solution. Thus, for example, where injected seawater is the clean-up fluid, the polymer is eluted from the filter-cake as a low viscosity solution that enters the permeable rock formation without appreciably impeding fluid injection rates.

A typical high molecular weight HEC commonly used in drilling and completion fluids is Natrosol 250 HHR (Trade Mark), a product of Aqualon (a division of Hercules Inc.) This has a viscosity average molecular weight of about 1.3 million as determined from Intrinsic Viscosity measurements. Typical viscosities and molecular weights for Natrosol HEC grades are given in the Table below:

| Natrosol Grade | Molecular Weight * | Brookfield Viscosity (cP) at 25°C, at 2% concentration in water |
|---|---|---|
| 250HHR | 1.3 x 10⁶ | 100,000 |
| 250H4R | 1.1 x 10⁶ | 50,000 |
| 250HR | 1.0 x 10⁶ | 30,000 |
| 250MR | 7.2 x 10⁵ | 6,000 |
| 250GR | 3.0 x 10⁵ | 350 |
| 250LR | 9.0 x 10⁴ | 15 |

| | | |
|---|---|---|
| *as determined by Intrinsic Viscosity measurements | | |

HEC polymers suitable for use in the present invention have viscosity average molecular weights (as determined by intrinsic viscosity measurement using the Mark Houwink relationship) in the range of about 20,000 to about 900,000, preferably about 40,000 to about 750,000, and more preferably about 90,000 to about 300,000. It can be seen from the above Table that 2% solutions of the preferred polymers exhibit a viscosity many times lower than the viscosity of the grade previously used in wellbore fluids.

Therefore, preferably there is used a hydroxyethylated polysaccharide which, in 2% aqueous solution at 25 °C, exhibits a Brookfield Viscosity of 15,000 cP or less, preferably 6,000 cP or less, more preferably 1,000 cP or less, and most preferably 350 cP or less. The linear flexible hydroxyethylated polysaccharides exhibit completely different behaviour to that of many polymers previously used for fluid loss control which are deliberately cross-linked such that they exhibit a permanent globular 3-D conformation in solution. Modified cross-linked starch products are typical of this type, and they are totally unsuitable for use in the present invention.

A second preferred class of polymer that has been found to provide the desired variable conformation behaviour is that of substantially non-crosslinked, flexible, substantially unbranched polymers bearing highly ionising acidic groups having a pKₐ of less than about 2.5. Such polymers contain units derived from an acidic monomer bearing acidic groups having a pKₐ of less than about 2.5. The acidic groups may be present in the neutralised form, for example as alkali metal or ammonium salts. Preferably, at least 20% by weight of the acid-group-bearing monomer is present in the polymer. The viscosity average molecular weight of the polymer is in the range 20,000 to 900,000, as determined from intrinsic viscosity measurements.

The conformation of these anionic linear polymers in solution in water is dependent upon charge effects. In a low salinity environment the anionic groups are strongly ionised, the consequent charge repulsion between adjacent anionic groups causing the polymer to adopt an extended linear conformation. Ionisation decreases as salinity increases, resulting in decreased repulsion between the anionic groups. Under these conditions the polymer coils up to a globular conformation. In the method of the present invention, when the filter-cake is ultimately contacted by a relatively low salinity fluid, the osmosis and permeation of the fluid dilutes the high salinity water in the filter-cake causing enhanced charge repulsion between the anionic groups of the polymer. The polymer converts to an extended conformation, and can be eluted through the pores of the filter-cake by aligning with the direction of fluid flow.

Polymers such as carboxymethyl cellulose (CMC) having only carboxylic acid groups, although linear and not cross-linked, are unsuitable. The pKₐ of the carboxylic acid groups in CMC is in the range 3.5 - 4.0 (by reference to gluconic acid (3.64) and isosaccharinic acid (3.87)). Although neutralized carboxylate groups may ionise well in distilled water, they will in practice not ionise sufficiently in low salinity salty water to provide an extended conformation, and the presence of significant concentrations of calcium and magnesium ions (as in seawater) will also result in non-ionised ion pairs, reduced charge repulsion and (under raised pH conditions), precipitation. Similar problems occur with polycarboxylic acids such as polyacrylates and polymethacrylates.

Examples of suitable acidic monomers having a pKₐ under 2.5 include vinylsulfonic acid, 2-acrylamido-2-methylpropane-3-sulfonic acid (AMPS), styrenesulfonic acids, and vinylphosphonic acid. Other suitable monomers include sodium allyl sulfonate and sodium methallyl sulfonate, 2-acrylamidoethane sulfonic acid, 2-acrylamidopropane sulfonic acid, 3-methacrylamidopropane sulfonic acid, and vinylbenzyl sulfonic acid. The alkali metal and ammonium salts of such acidic monomers are also suitable, and the term acid as used herein is meant to include the corresponding alkali metal and ammonium salts.

Copolymers of the acidic monomer having a pKₐ <2.5 with one or more co-monomers are suitable provided the resulting copolymer comprises at least 20% by weight of the acidic monomer having a pKₐ <2.5. Suitable co-monomers include but are not restricted to acrylic acid, acrylamide, N,N-dimethylacrylamide, maleic acid or maleic anhydride, itaconic acid, hydrophilic esters of acrylic acid or methacrylic acid such as hydroxyethyl methacrylic acid, vinyl acetate (which may be post-hydrolysed to a vinyl alcohol group in the polymer), N-vinyl amides such as N-vinyl formamide and N-vinyl acetamide, N-vinyl pyrrolidone and N-vinyl-N-methylacetamide.

Styrene sulfonic acid homopolymers are suitable and may be produced either by the polymerisation of styrene sulfonic acid or by the sulfonation of polystyrene. The latter method may leave some styrene groups un-sulfonated. This is tolerable if there are sufficiently few un-sulfonated groups that they do not compromise the water-solubility in the ionic environments used in this invention.

Linear polymers containing acrylamido methyl propane sulfonate (AMPS) groups are particularly preferred. Suitable polymers are described in US Patents 5,510,436; 3,629,101; 4,357,245; 4,309,523; and 4,048,077. A preferred polymer of this type is Hostadrill 4706 from Clariant GmbH. This type of polymer contains greater than 20% by weight AMPS monomer, units derived from N-vinyl acetamide, N-vinyl formamide, or N-vinyl-N-methylacetamide, and also acrylamide units. Its viscosity average molecular weight is in the range 200,000 - 900,000 as determined from intrinsic viscosity measurements.

The aqueous base fluid in the wellbore fluid of the invention may be a synthetic brine containing one or more salts, and for most applications is of significantly higher salinity than seawater. As would be well known to the person skilled in the art, the salt should be compatible with the polymer, for example, should not form an insoluble precipitate with the polymer. Suitable salts include alkali metal halides; the alkaline earth metal halides; and sodium, potassium or caesium acetates or formates. Preferred salts include for example sodium chloride, potassium formate or calcium chloride. Carbonate, sulfate, phosphate, silicate and citrate salts (among other polyvalent anions), for example of alkali metals, may also be used, especially where the use of their greater "salting-out" power is desirable. Mixtures of salts may be used.

The salt may be present in the aqueous base fluid of the wellbore fluid at concentrations up to saturation. The base fluid may for example contain up to about 25% by weight of salt, for example sodium chloride, which produces a saturated solution at ambient temperature. Preferably the base fluid contains at least 5% by weight, more preferably at least 10% by weight, of one or more dissolved salts. The salt content will contribute to the density of the wellbore fluid, which is important for well-control purposes. When a low density is desired, it is possible to manipulate the conformation in solution of the polymer by the use of certain anions and cations. For example polyvalent anions such as phosphate, sulfate and citrate induce hydroxyethylated polymers to adopt a globular conformation at much lower concentrations than can the chloride anion. However, a higher density is often required, and the salt concentration will frequently be above 10%. Suitably, the specific gravity of the wellbore fluid is in the range 0.9 to 2.5, typically in the range 1.0 to 2.0.

As mentioned above, the conformation of the polymer may depend upon the nature of the anion and cation species present in the salt(s). For example, the dehydration of the polyoxyethylene chains in hydroxyethylated polysaccharides is promoted by the addition of polyvalent anions such as phosphate, sulfate or citrate, while the molecular conformation of a highly ionising anionic polymer can be manipulated by varying the concentration of divalent cations such as calcium and magnesium.

The lower salinity fluid may be fresh water or brackish water or a relatively low salinity brine, including seawater. In many applications, it is preferably seawater. It must be sufficiently low in salt content to cause the polymer to adopt an extended conformation. Preferably, the content of salts in the lower salinity fluid is at least 4% by weight lower in dissolved salt content than the aqueous base fluid of the wellbore fluid. The lower salinity fluid preferably contains less than 6%, preferably less than 4%, by weight of dissolved salts.

To obtain a sufficient salinity contrast to effect the polymer conformation change, the concentration of salt(s) in the water phase of the wellbore fluid may be at least twice, preferably at least four times, the concentration of salts in the relatively low salinity fluid. Thus, in the case of a water injection well where the relatively low salinity fluid is injected seawater (typically containing about 3.5% by weight dissolved salts) which assumes the role of a clean-up fluid, the water phase of the wellbore fluid should contain at least 7%, preferably at least 14%, by weight total dissolved salts.

Suitable choice of salts allows a broad range of specific gravity and salt concentration. Some examples are shown in the following Table. The concentrations and specific gravities are approximate and refer to ambient temperature.

| SALT | %w/w at saturation | specific gravity of saturated solution |
|---|---|---|
| KCl | 24 | 1.16 |
| NaCl | 26 | 1.20 |
| CaCl₂ | 40 | 1.40 |
| potassium formate | 75 | 1.57 |
| caesium formate | 83 | 2.3 |
| potassium carbonate | 50 | 1.54 |

The use of a brine to attain the required density for the wellbore fluid allows the avoidance of insoluble weighting materials such as barite. This has the additional advantage of minimising the quantity of non-removable particles in the filter-cake.

Bacterial gums such as xanthan and scleroglucan are frequently used in aqueous-based drilling fluids because they impart the good gel strength and increased low-shear-rate viscosity required for solids suspension and for sweeping debris such as drill cuttings out of the well. They are also tolerant to a variety of ionic contaminants. These polymers have a "rigid rod" conformation in solution because the polymer chains adopt a strongly hydrogen-bonded double helix arrangement (triple helix in the case of scleroglucan). The rigid rod conformation does not unravel upon reducing salinity at temperatures under the transition temperature particular to the polymer. This transition temperature is quite high - for example about 125 °C for xanthan gum. This is above the bottom-hole temperature for many wells, especially when cold seawater is being injected. It has been found that, when carrying out the method of the invention using a wellbore fluid containing xanthan or scleroglucan gum, the gelled solution of rod-like polymer molecules of xanthan or scleroglucan gum in the filter-cake is difficult to elute from the matrix of solid particles forming the filter-cake. Therefore, wellbore fluids according to the invention are preferably free from rigid-rod bacterial gums such as xanthan or scleroglucan gum.

In a preferred embodiment of the invention, the desired gel strength and elevated low-shear-rate viscosity is imparted to the wellbore fluid by the addition of insoluble, micro-fibrous particulate materials. These provide a synergy with the particular salinity-sensitive polymers used in the present invention, for the following reason. In the wellbore fluid the fibrous particles associate with their neighbouring particles to form a 3-D structure that provides the desired viscous characteristics. Although on filtration of the fluid the fibrous particles will be trapped in the filter-cake, they do not present a significant barrier to the subsequent flow of relatively low salinity fluid because the open matted arrangement of fibres in the filter-cake is very permeable.

Preferred micro-fibrous materials are selected from the class including fibrous clays and cellulose fibres. Suitable fibrous clays include attapulgite, sepiolite and halloysite. Asbestos fibre is less preferred because of its impact on human health. Attapulgite is known as a drilling fluid additive under the name "Salt Gel". Sepiolite is also known as a drilling fluid additive. Suitable cellulose fibres are commercially available. Examples include microcrystalline cellulose available from FMC Corporation, and bacterial cellulose, for example "Cellulon" formerly available from Weyerhauser Inc. Another suitable cellulose material is available from Halliburton under the trade name N-VIS HB as a pre-sheared concentrated dispersion of cellulosic fibres.

Another water-insoluble material capable of forming extended gelling structures in a water phase is nano-sized silica particles such as fumed silica. This too can provide the desired viscous characteristics without unduly compromising the cleanup of the filter-cake.

In a particularly preferred embodiment the wellbore fluid according to the invention also includes a substantial proportion, typically between about 2.5% and 50% by volume of the combined liquid phases, of a dispersed polar organic liquid that is less than 10% by weight soluble in the aqueous base fluid of the wellbore fluid, but which is much more soluble in water.

Thus, when the wellbore fluid forms a filter-cake on the surface of a permeable formation, the filter-cake comprises solid particles that were dispersed in the fluid, entrapped polymer molecules in a globular conformation, and accumulated drops of organic liquid in the filter-cake. The polar organic liquid is generally poorly emulsified in the wellbore fluid, and hence liquid drops may coalesce. The polar organic liquid thus provides areas or pathways in the filter-cake that are susceptible to facile dissolution by water. Of course, it is not essential to use pure water as the second fluid designed to penetrate the filter-cake. Rather, any fluid of a lower salinity than the aqueous base fluid may be used, provided that the salinity is sufficiently low that the polar organic liquid is soluble in that lower salinity fluid.

The polar organic liquid will be soluble in pure water. It is preferably also soluble in seawater, so that seawater rather than fresh water can be used as the second fluid. In addition, preferably the solubility of the polar organic liquid should be:
- Greater than about 20% by weight in seawater at 20°C. As a model for seawater, the synthetic seawater approximating to that from the North Sea of about 3.5% by weight total dissolved salts prepared using the Seawater Corrosion Test Mixture kit (Product No. 331533P) available from VWR International Ltd., Poole, Dorset, UK, may be used; and
- Less than about 10% by weight in a 10%w/w aqueous NaCl solution at 50°C.

The polar organic liquid may for example be a polyalkylene glycol, an ester, a diol, or an ether. In general, suitable polar organic liquids will comprise carbon, hydrogen and oxygen atoms only. Compounds containing at least one, preferably several, ether links, are particularly suitable. Preferably the polar organic liquid is a polyalkylene glycol ("PAG"). Especially preferred are block, alternating or random copolymers of ethylene oxide and propylene oxide, or a polypropylene glycol having a molecular weight of about 200 to about 600. Preferred examples include random copolymers of ethylene oxide (EO) and propylene oxide (PO), especially when initiated by water, ethylene glycol or propylene glycol. Alkoxylates initiated by an alkanol having four or less carbon atoms, for example butanol, are also suitable. Alkoxylates initiated using an alkanol having 5 or more carbon atoms may also be used, but in some circumstances may be less preferred because they have well-defined hydrophobic and hydrophilic segments in their molecules. This causes increased surface-active effects, which can be detrimental. For example, in some circumstances such surface-active materials could cause problems such as foaming, emulsion blocking in oil-producing reservoirs, and reservoir rock wettability alteration.

Low molecular weight polypropylene glycols such as tetrapropylene glycol and polypropylene glycol with a number average molecular weight of about 200 to about 600 are also very suitable. For example polypropylene glycol with a number average molecular weight of about 400 is a preferred example. Tetrapropylene glycol (molecular weight 254) is particularly suitable for use with a wellbore fluid containing sodium chloride; it is less preferred for use in conjunction with a calcium chloride brine in the wellbore fluid, as it is quite soluble in this type of brine.

The solubility of PAGs in various brines can be manipulated by varying the molecular weight of the product and the molar ratio of, e.g. EO to PO in order to achieve the required properties. Also, the initiator and end-caps may be varied to produce suitable polar organic liquids.

Especially preferred are random copolymers of EO and PO some of which are exemplified by the following BREOX^{™} products manufactured by Cognis: BREOX 50A 20, BREOX 50A 20S, BREOX 50A 689, BREOX 60W 460, BREOX 60W 1000, and BREOX 75W 2050. Other suitable commercial polyalkylene glycols include DCP 208 available from Innovene, GEM CP and GEM GP available from Baroid Fluid Services (division of Halliburton), GLYDRIL LC and GLYDRIL MC from M-I Swaco *LLC,* AQUACOL and AQUACOL B from Baker Hughes Drilling Fluids.

Polytetrahydrofuran having a low average molecular weight in the range of about 160 to about 450, such as PolyTHF Polyether Diol 250 from BASF, is also suitable for use in the present invention.

Certain ethers, for example dialkyl ethers of oligo-ethylene glycols, especially the dialkyl ethers of triethylene glycol and higher oligo-ethylene glycols, have high solubility in seawater and much-reduced solubility in higher concentration brines. Similarly polyalkylene glycols can be end-capped with ester groups to manipulate the solubility characteristics.

As discussed above, the content and nature of dissolved salt(s) in the aqueous base fluid can be used to manipulate the solubility of the polymer present. Further, the content and nature of the dissolved salt(s) can also be used to manipulate the solubility/dispersibility of the polar organic liquid in the aqueous base fluid. Thus, selection of suitable levels of dissolved salt(s), and selection of suitable anions, can render a polar organic liquid sufficiently insoluble in the aqueous base fluid to enable the polar organic liquid to form a dispersion therein.
Polyalkylene glycols and alcohol alkoxylates have been used before in water-based drilling fluids as shale hydration inhibitors, lubricants or emulsifiers. They have not however been used to impart the characteristic of increasing the permeability of filter-cakes on contact with low salinity water. Such a use promises much reduced Skin Factor when combined with the salinity-responsive polymers defined herein. Skin Factor is a dimensionless number that is a measure of formation damage related to the increased pressure drop across the zone around the wellbore which has been damaged (reduced in permeability) by invasion of the wellbore fluid.

The fluid of the invention has a continuous aqueous phase. Thus, it may be either a purely aqueous based fluid, or an oil-in-water emulsion, i.e. an emulsion in which oil droplets are dispersed in an aqueous continuous phase, or a dispersion of a polar organic liquid that is substantially insoluble in the saline continuous aqueous phase, as discussed above. In the case of an oil-in-water emulsion, at least one emulsifier will be present. Suitable conventional emulsifiers would be well known to the person skilled in the art. In an emulsion, the oil phase is for example dispersed in the continuous aqueous phase in an amount of from 1 to 65 % by volume, preferably 2.5 to 40 % by volume, most preferably 10 to 35 % by volume based on the total volume of the aqueous and oil phases. Generally, the oil phase is distributed in the aqueous phase in the form of finely divided droplets. Suitably, the droplets of oil phase have an average diameter of less than 40 microns, preferably between 0.5 and 20 microns, and most preferably between 0.5 and 10 microns.

The discontinuous oil phase of an oil-in-water emulsion may for example be a crude oil, a refined petroleum fraction, a mineral oil, a synthetic hydrocarbon, or any non-hydrocarbon oil that is capable of forming a stable emulsion with the continuous aqueous phase. Preferably, such a non-hydrocarbon oil is biodegradable and is therefore not associated with ecotoxic problems. It is particularly preferred that the non-hydrocarbon oil has a solubility in water at room temperature of less than 2 % by weight, preferably, less than 1.0 % by weight, most preferably, less than 0.5 % by weight.

In one preferred embodiment, the fluid according to the invention is an entirely water-based system, in which case the aqueous base fluid comprises a solution of the polymer in a brine, insubstantial amounts, or no, oil being present. In a further preferred embodiment, the fluid contains a polar organic liquid as described above.

Typically, the wellbore fluid is a drilling fluid, completion fluid, lost-circulation control fluid, workover fluid, packer fluid, or hydraulic fracturing fluid.

Fluid loss may be determined at room temperature, or under high temperature/high pressure (HTHP) conditions, according to the specifications of the American Petroleum Institute (API) as detailed in "Recommended Practice Standard Procedure for Field Testing Water-Based Drilling Fluids", API Recommended Practice 13B-1 Third Edition 2003.

Preferably, a bridging particulate material is added to a wellbore fluid of the present invention in order to assist in the formation of a filter-cake and to assist in bridging the fractures. Bridging agents are composed of solid particles whose particle size is such that they will not appreciably intrude into a porous and permeable rock formation such as sandstone. On the wellbore wall there are exposed entrances to pores or fissures in which the bridging particles "log-jam" and start to build a filter-cake. The permeability of the rock matrix or fissures is thus protected from plugging by invaded materials.

Suitably, the bridging particulate material is sized so as not to enter the pores or fissures of any permeable rock through which the wellbore passes. Typically, the bridging material has an average particle diameter in the range 15 to 2000 microns. The size chosen depends upon the particular operation in which the wellbore fluid is employed and the size of the pores, fissures or other conduits in the rock formation.
The bridging material may comprise substantially spherical or angular particles such as those produced by grinding. However, it is also envisaged that the bridging material may comprise elongate particles, for example, fibres or flakes. Preferably, the bridging material has a broad (polydisperse) particle size distribution.

Typical bridging particulate material comprises at least one substantially crush resistant particulate solid, for example graphite, calcium carbonate, celluloses, micas, proppant materials such as sands or ceramic particles and combinations thereof. These materials are very inert and are environmentally acceptable. However, because this invention concerns filter-cakes that are removed or made permeable by the application of relatively low salinity water, it is preferred that the bridging particles have at least some water-solubility. The use in drilling and completion fluids of salt particles such as sodium chloride suspended in saturated brine is well known. The use of conventional polymers such as bacterial gums and starch derivatives in these suspended salt fluids has frequently resulted in poor clean-up of the filter-cakes. The use of the present invention together with the known suspended salt bridging solids provides a great improvement in the rate and degree of filter-cake removal by low salinity water, and therefore provides a preferred embodiment of the invention.

Further, this invention is also well-suited to be applied in conjunction with sparingly water-soluble bridging solids such as are described in WO 2007/088322. The sparingly soluble bridging solids are particles of melamine, lithium carbonate, magnesium sulfite or lithium phosphate. They have the advantage over suspended sodium chloride fluids that they can be used in lower density wellbore fluids, they are less susceptible to changes during the temperature cycling on circulation in and out of the well, and they are less prone to suffer premature failure of the filter-cake and losses of the wellbore fluid to the formation. The change of polymer conformation from globular to extended in the relatively low salinity fluid (e.g. seawater), coupled with the dissolution of the polar organic liquid (if present), results in greater exposure of the sparingly soluble bridging particles to the clean-up fluid and aids their dissolution in the low salinity water.

Similarly, for acid-soluble bridging particles such as calcium carbonate, the uncoiling of the polymers in the relatively low salinity fluid (e.g. seawater) and the dissolution of the polar organic liquid (if present) increases the effectiveness of a subsequent clean-up with an acid solution. The sparingly soluble bridging agents of WO 2007/088322 are also readily soluble in mild acid solutions.

Finely-dispersed additives for increasing the fluid density of the wellbore fluid may also be incorporated. Suitable additives for increasing the fluid density include barium sulfate (barite), calcium carbonate (calcite), the mixed carbonate of calcium and magnesium (dolomite), hematite, haussmannite and mixtures thereof.

Optionally, the wellbore fluid of the present invention may comprise other conventional wellbore fluid additives such as polymeric viscosifiers, thinners, fluid loss reducers, clay hydration inhibitors, lubricants, clays such as bentonite, surfactants or any additive known to those familiar with wellbore fluid formulations. Sometimes the conventional additives will have an adverse effect on the clean-up of filter-cake by a reduced salinity fluid, but their presence may be unavoidable for operational reasons.

The quantity of auxiliary substances and additives used in each case lie within the usual boundaries for a wellbore fluid.

Preferably the plastic viscosity of the fluid of the present invention is in the range 1 to 100 mPa.s. Preferably, the yield point is between 2 and 50 Pa.

The following Examples illustrate the invention.

### Materials

PPG 400: polypropylene glycol; average molecular weight (Mn) 400 ex Aldrich (Sigma-Aldrich Ltd., U.K.)
Melamine powder: Melamine 004 of particle size 99% < 180 microns ex DSM Melamine, The Netherlands. Now sold under the trade name MelaminebyDSM SLP.
Duovis^{™}: Xanthan gum ex M-I Swaco *LLC*.
Biozan^{™} Welan gum ex CP Kelco, a Huber company, Atlanta USA
Drispac^{™}: High purity Carboxymethylcellulose (polyanionic cellulose) of controlled degree of substitution of about 1.0.
Floplex^{™}: Carboxymethyl cross-linked starch derivative ex M-I Swaco *LLC*
HEC 1,300,000: Hydroxyethylcellulose - viscosity average Molecular Weight 1.3 million ex Aldrich (Sigma-Aldrich Ltd., U.K.)
HEC 250,000: Hydroxyethylcellulose - viscosity average Molecular Weight 250,000 ex Aldrich (Sigma-Aldrich Ltd., U.K.)
HEC 90,000: Hydroxyethylcellulose - viscosity average Molecular Weight 90,000 ex Aldrich (Sigma-Aldrich Ltd., U.K.)
Microcrystalline cellulose: Cellulose, Microcrystalline Colloidal ex Aldrich (Sigma-Aldrich Ltd., U.K.)
Hostadrill 4706™: Synthetic copolymer containing >20% by weight AMPS monomer. Ex Clariant GmbH, Frankfurt, Germany.
Sodium chloride: laboratory grade salt ex Aldrich (Sigma-Aldrich Ltd., U.K.)
Salt Gel: Attapulgite clay ex Baroid, Halliburton Energy Services
Caustic Soda: used to adjust the final pH of the fluids to pH 10.0. Lab. grade ex Aldrich Seawater: synthetic seawater approximating to that from the North Sea of about 3.5% by weight total dissolved salts. Prepared using the Seawater Corrosion Test Mixture kit (Product No. 331533P) conforming to DEF1053/B.S.3900/B.S.2011, available from VWR International Ltd., Poole, Dorset, UK.

### Units

The following U. S. to metric unit conversion factors were used in the examples:
1 US gallon (gal) = 3.785 litres
1 lb = 0.454 kg
1 lb/gal (ppg) = 0. 1198 g/cm3
1 barrel (bbl) = 42 gal
1 lb /bbl (ppb) = 2.835kg/m3
1 lb/100ft² = 0.4788 Pascal (Pa)
1 lb/sq.in. (psi) = 6.895 x 10³ Pa

### Test Methods

The Fluid Formulations were tested in accordance with the "Recommended Practice Standard Procedure for Field Testing Water-Based Drilling Fluids", API Recommended Practice 13B-1 Third Edition 2003 and ISO 10416: 2002 (API RP13I 7^{th} edition 2004 "Recommended Practice for Laboratory Testing of Drilling Fluids").

### Example 1

### Effect of various water-soluble polymers on Fluid Loss Control and on Filter-cake clean-up.

**Table 1 Base fluid Formulation**

| | |
|---|---|
| Seawater | 240g |
| Polymer | as per Table 2 |
| Polypropylene glycol 400 | 60g |
| Sodium Chloride | 75g |
| DSM Melamine 004 | 16g |
| pH | 10 with NaOH |

Fluids were prepared according to the formulation in Table 1, which combines dispersions of seawater soluble PPG 400 and of seawater-soluble melamine powder. The first fluids contained polymers representing those of the invention, and secondly (for comparison) polymers that are unsuitable (because of much slower filter-cake clean-up) as shown in Table 2 below. The varying doses were used in order to obtain roughly comparable API Fluid Loss results and to approximate to normal use concentrations.
After mixing the fluids were allowed to stand overnight to fully hydrate the polymers, and then re-stirred prior to Fluid loss testing. The API FL was tested using pre-wet filter-papers to avoid weaknesses in the filter-cake caused by the expansion and rucking of the filter paper that occurs when dry paper discs are installed and subsequently wet by filtrate.

After the API FL test the excess mud was poured out of the cell and replaced by approximately 100ml of seawater, the cell re-assembled and 100 psi nitrogen pressure applied to the seawater. The volume of seawater that passed through the filter-cake was measured versus time. The filtration and seawater permeation results are in Table 2.

**Table 2 Comparison of Preferred and Unsuitable polymers - effects on Fluid Loss and Permeation of Seawater through Filter cakes**

| **Preferred Polymers** | **Dose (g)** | **API Fluid Loss (mls)** | **Permeated Seawater Volume (mls)** | | | | |
|---|---|---|---|---|---|---|---|
| | | | 2 min | 10 min | 12 min | 30 min | 240 min |
| Hostadrill 4706 | 3 | 14.0 | 103 | 103 | 103 | 103 | 103 |
| HEC 90,000 | 3 | 6.5 | 10 | 70 | 110 | 110 | 110 |
| HEC 250,000 | 3 | 3.0 | 1 | 8 | | 18 | 100 |
| HEC 250,000 | 2 | 3.2 | 2 | 9 | | 50* | 101 |

| **Unsuitable polymers (for comparison)** | | | | | | | |
|---|---|---|---|---|---|---|---|
| HEC 1,300,000 | 2 | 3.5 | 0.6 | 2.4 | | 3.0 | 9 |
| Duovis (xanthan gum) | 2 | 5.0 | 0.4 | 2.5 | | 5.0 | 40 |
| Biozan (welan gum) | 2 | 7.5 | 0.5 | 2.5 | | 4.0 | 109 |
| Drispac (polyanionic cellulose) | 2 | 5.5 | 0.4 | 2.5 | | 4.0 | 16 |
| Floplex (carboxymethyl starch) | 6 | 4.0 | 0.7 | 4.0 | | 6.0 | 105 |

| | | | | | | | |
|---|---|---|---|---|---|---|---|
| * 100 mls in 43 minutes | | | | | | | |

Where the permeated seawater volume stayed constant versus time at around 100 mls, it was because there was no more seawater left in the cell as all of it had passed through the filter-cake.

The filter-cake containing the sulfonated polymer, Hostadrill 4706, allows seawater to break through and permeate very rapidly using all the seawater in the cell in two minutes. For instance, although the Fluid loss was about double that of the HEC 90,000 fluid, the seawater flow rate over the first two minutes was about 10 times faster than the HEC 90,000 case. In turn the HEC 90,000 flow rate over the first two minutes was about fourteen times faster than for the best of the unsuitable polymers. The HEC 250,000 at both doses (3g and 2g) gave good fluid loss control and quite good seawater permeation results, especially at the lower dose where the permeation rate increased rapidly with time.

The HEC (1.3 million molecular weight) result emphasises the importance of the lower preferred molecular weight range for the preferred polymers. The high molecular weight HEC molecules concentrated in the filter-cake clearly have a very high resistance to dissolution / elution or displacement from the filter-cake.

The unsuitable polymers' filter-cakes were all still allowing little seawater to pass after 30 minutes. Eventually the rate increased for the Biozan and Floplex filter-cakes, probably as the seawater found weaker paths through the cake due to the presence of the seawater-soluble melamine and PPG 400.

### Example 2 Comparison of xanthan gum with fibrous viscosifiers - effects on Fluid Loss and on seawater permeation through filter-cakes

Three fluids were mixed according to the formulations in Table 3. After mixing the fluids were allowed to stand overnight to fully hydrate the polymers, and then re-stirred prior to Fluid loss testing. The API FL was tested using pre-wet filter-papers to avoid weaknesses in the filter-cake caused by the expansion and rucking of the filter paper that occurs when dry paper discs are installed and subsequently wet by filtrate.

After the API FL test the excess mud was poured out of the cell and replaced by approximately 100ml of seawater, the cell re-mounted and 100 psi nitrogen pressure applied to the seawater. The volume of seawater that passed through the filter-cake was measured versus time.

**Table 3 Fluid Formulations and Results**

| **Component** | | **Quantity (g)** | | |
|---|---|---|---|---|
| Seawater | | 240 | 240 | 240 |
| microcrystalline cellulose | | 4 | -- | -- |
| Salt gel (attapulgite) | | -- | 10 | -- |
| Duovis | | -- | -- | 1 |
| Adjusted the pH to 10 with NaOH and sheared on the Silverson Mixer for 20 minutes | | | | |
| HEC 90,000 Aldrich | | 4 | 4 | 4 |
| Polypropylene glycol 400 | | 60 | 60 | 60 |
| Sodium Chloride | | 75 | 75 | 75 |
| DSM Melamine 004 | | 16 | 16 | 16 |
| **RESULTS** API Fluid Loss (ml) | | 2.5 | 6.5 | 2.0 |

| Seawater permeation at 100 psi pressure. | | Permeated Seawater Volume | | |
|---|---|---|---|---|
| | Time (min) | | (ml) | |
| | 5 | 2 | 2 | 2 |
| | 15 | 6 | 4 | 2.5 |
| | 40 | 53 | 9 | 5 |
| | 70 | 103 | 20 | 10 |
| | 160 | 103 | 77 | 34 |

The results show that the fibrous viscosifiers provide much enhanced seawater permeation through the filter-cake compared to xanthan gum. In particular the seawater flow rate for the microcrystalline cellulose after 40 minutes was about ten times that of the xanthan gum filter-cake, in spite of the very similar initial filter-cake permeability as indicated by the Fluid Loss results.

### Example 3 Effect of the Polar Organic Liquid

**Table 4: PROPERTIES OF SOME POLYALKYLENE GLYCOLS SUITABLE AS THE POLAR ORGANIC LIQUID**

| Product | Initiated with | EO:PO molar ratio | Viscosity at 40°C cSt | Cloud point °C (at 1% in water or as stated) | Solubility in seawater of 3.5% wt TDS at 20°C (% wt.) |
|---|---|---|---|---|---|
| BREOX 50A 20 | n-butanol | 50:50 | 19 | no data | > 20 (miscible) |
| BREOX 50A 20 S | n-butanol | 50:50 | 18-22 | 55.6 (5%) | > 20 (miscible) |
| DCP 101 | n-butanol | 50:50 | 19 | 63 (at 3%) or 53 (at 6%) | > 20 (miscible) |
| DCP 208 | n-butanol | 100:0 | 7.3 | >100 (6%) | > 20 (miscible) |
| BREOX 60W 460 | diol | 60:40 | 455 | >80 | > 20 (miscible) |
| BREOX 60W 1000 | diol | 60:40 | 1000 | 72 | > 20 (miscible) |
| BREOX 75W 2050 | diol | 75:25 | 2025 | 75 | > 20 (miscible) |
| Tetrapropylene glycol | | 0:100 | 35 | >100 | >20 (miscible) |
| Polypropylene glycol M.Wt. 400 | | 0:100 | 26 | 75 (at 1%) or ∼50 (at 10% in seawater) | >20 |

The Breox materials shown are all random copolymers of EO and PO. "BREOX", DCP 101 and DCP 208 are Trade Marks.

The solubility of all of the above materials at 50°C in sodium chloride brine of strength 10 % by weight or greater was found to be less than 10% by weight. As shown in Table 4 the solubility in seawater at 20°C of each liquid was in excess of 20%. They are thus very suitable for use in the present invention.

To illustrate the contribution of the polar organic liquid to the Fluid Loss and to the subsequent seawater permeation, a fluid similar to the microcrystalline cellulose fluid in Example 2 was mixed, omitting the PPG 400.

| **Component** | **Quantity** **(g)** |
|---|---|
| Seawater | 240 |
| microcrystalline cellulose | 4 |
| Adjusted the pH to 10 with NaOH and sheared on the Silverson Mixer for 20 minutes | |
| HEC 90,000 Aldrich | 4 |
| Sodium Chloride | 75 |
| DSM Melamine 004 | 16 |

This was tested for API Fluid Loss and then seawater permeation through the filter-cake using the method as before

| **RESULTS** | | |
|---|---|---|
| API Fluid Loss (ml) | | 3.4 |

| Seawater permeation at 100 psi pressure. | | |
|---|---|---|
| | Time (min) | (mls) |
| | 5 | 3 |
| | 15 | 5.5 |
| | 40 | 16 |
| | 70 | 43 |
| | 117 | 95 |

The omission of the PPG 400 resulted in an increase in fluid loss and a substantial slow down in the permeation of seawater compared to the results in Example 3. The presence of the dispersed polar organic liquid therefore provides a valuable contribution to both these properties.

### Example 4 Effect of melamine

To illustrate the contribution of the melamine powder to the Fluid Loss and to the subsequent seawater permeation, a fluid similar to the microcrystalline cellulose fluid in Example 2 was mixed, omitting the melamine.

| **component** | **quantity** **(g)** |
|---|---|
| Seawater | 240 |
| microcrystalline cellulose | 4 |
| Salt gel (attapulgite) | -- |
| Duovis | -- |
| Adjust to pH10 and shear on silverson for 20 minutes | |
| HEC 90,000 Aldrich | 4 |
| Polypropylene glycol 400 | 60 |
| Sodium Chloride | 75 |
| pH Restore to 10 with NaOH | |

| **RESULTS** | | |
|---|---|---|
| API Fluid Loss (ml) | | 5.4 |

| Seawater permeation at 100 psi pressure. | | |
|---|---|---|
| | Time (min) | (mls) |
| | 5 | 4 |
| | 15 | 7 |
| | 40 | 21 |
| | 70 | 44 |
| | 120 | 90 |

The omission of the melamine resulted in an increase in fluid loss and a substantial slow down in the permeation of seawater compared to the results in Example 2. The presence of the dispersed sparingly-water-soluble melamine particles therefore provides a valuable contribution to both these properties.

## Claims

1. An aqueous-based wellbore fluid comprising:
- an aqueous base fluid having a first level of salinity; and
- at least one polymer dissolved in said aqueous base fluid at a concentration of at least 1.0g/l, said polymer (i) having a viscosity average molecular weight in the range of from 20,000 to 900,000; and (ii) having a molecular structure such that the polymer chains dissolved in said wellbore fluid adopt a globular conformation, while in a fluid of a second level of salinity, said second level being a lower level of salinity than said first level, the polymer chains adopt an extended conformation.

2. A wellbore fluid as claimed in claim 1, in which the polymer is present at a concentration of at least 2.0g/l.

3. A wellbore fluid as claimed in either claim 1 or claim 2, in which the polymer has a viscosity average molecular weight of at least 40,000.

4. A wellbore fluid as claimed in any one of the preceding claims, in which the polymer is derived from a substantially unbranched and substantially non-crosslinked polysaccharide.

5. A wellbore fluid as claimed in claim 4, in which the polymer is derived from cellulose.

6. A wellbore fluid as claimed in either claim 4 or claim 5, in which the polymer is a water soluble, hydroxyethylated polysaccharide optionally contain substituent groups in addition to hydroxyethyl.

7. A wellbore fluid as claimed in claim 6, in which the polymer is hydroxyethylcellulose, ethylhydroxyethyl cellulose, carboxymethylhydroxyethyl cellulose, hydroxypropylhydroxylethyl cellulose, methylhydroxyethyl cellulose, hydroxyethyl guar or hydroxypropylhydroxyethyl guar.

8. A wellbore fluid as claimed in claim 7, in which the polymer is hydroxyethylcellulose.

9. A wellbore fluid as claimed in claim 8, in which the hydroxyethylcellulose has a viscosity average molecular weight in the range of about 40,000 to about 750,000.

10. A wellbore fluid as claimed in any one of claims 6 to 9, in which the polymer, in 2% aqueous solution at 25 °C, exhibits a Brookfield Viscosity of 15,000 cP or less.

11. A wellbore fluid as claimed in any one of claims 1 to 3, in which the polymer contains units derived from an acidic monomer bearing acidic groups having a pKₐ of less than about 2.5, said acidic groups optionally being present in the neutralised form.

12. A wellbore fluid as claimed in claim 11, in which, in the polymer, at least 20% by weight of units derived from the acid-group-bearing monomer are present in the polymer.

13. A wellbore fluid as claimed in either claim 11 or claim 12, in which the polymer includes units derived from vinylsulfonic acid, 2-acrylamido-2-methylpropane-3-sulfonic acid, a styrenesulfonic acid, vinylphosphonic acid, sodium allyl sulfonate, sodium methallyl sulfonate, 2-acrylamidoethane sulfonic acid, 2-acrylamidopropane sulfonic acid, 3-methacrylamidopropane sulfonic acid, or vinylbenzyl sulfonic acid.

14. A wellbore fluid as claimed in any one of claims 11 to 13, in which the polymer is a styrene sulfonic acid homopolymer.

15. A wellbore fluid as claimed in any one of claims 11 to 13, in which the polymer is a comonomer derived from at least 20% by weight of an acidic monomer having a pKₐ of less than about 2.5 with one or more co-monomers selected from acrylic acid, acrylamide, N,N-dimethylacrylamide, maleic acid or maleic anhydride, itaconic acid, hydrophilic esters of acrylic acid or methacrylic acid such as hydroxyethyl methacrylic acid, vinyl acetate, an N-vinyl amide, N-vinyl pyrrolidone and N-vinyl-N-methylacetamide.

16. A wellbore fluid as claimed in claim 15, in which the polymer is a polymer containing acrylamido methyl propane sulfonate groups.

17. A wellbore fluid as claimed in claim 16, in which the polymer has a viscosity average molecular weight in the range 200,000 - 900,000.

18. A wellbore fluid as claimed in any one of the preceding claims, in which the aqueous base fluid contains at least 10% by weight of one or more dissolved salts.

19. A wellbore fluid as claimed in any one of the preceding claims, which also comprises an insoluble, micro-fibrous particulate material.

20. A wellbore fluid as claimed in claim 19, in which the insoluble, micro-fibrous material is selected from the class consisting of fibrous clays and cellulose fibres.

21. A wellbore fluid as claimed in any one of the preceding claims, which also comprises nano-sized silica particles.

22. A wellbore fluid as claimed in any one of the preceding claims, which also comprises a dispersed polar organic liquid that is less than 10% by weight soluble in the aqueous base fluid of the wellbore fluid, but which is soluble in water.

23. A wellbore fluid as claimed in claim 22, in which the polar organic liquid is present in an amount of from 2.5% to 50% by volume of the combined liquid phases.

24. A wellbore fluid as claimed in either claim 22 or claim 23, in which the polar organic liquid has a solubility of greater than about 20% by weight in seawater at 20°C, and less than about 10% by weight in a 10%w/w aqueous NaCl solution at 50°C.

25. A wellbore fluid as claimed in any one of claims 22 to 24, in which the polar organic liquid is a polyalkylene glycol, an ester, a diol, or an ether.

26. A wellbore fluid as claimed in claim 25, in which the polar organic liquid is a polyalkylene glycol.

27. A wellbore fluid as claimed in any one of the preceding claims, which also includes a sparingly water-soluble bridging solid comprising particles of melamine, lithium carbonate, magnesium sulfite or lithium phosphate.

28. A method of carrying out a wellbore operation, which includes the steps of:
(a) introducing into a wellbore an aqueous-based wellbore fluid as claimed in any one of the preceding claims, comprising:
- an aqueous base fluid having a first level of salinity; and
- at least one polymer dissolved in said aqueous base fluid at a concentration of at least 1.0g/l, said polymer (i) having a viscosity average molecular weight in the range of from 20,000 to 900,000; and (ii) having a molecular structure such that the polymer chains dissolved in said wellbore fluid adopt a globular conformation, while in a fluid of a second level of salinity, said second level being a lower level of salinity than said first level, the polymer chains adopt an extended conformation;
(b) allowing a filter-cake including said polymer in globular conformation to form; and subsequently
(c) bringing a second fluid into contact with the filter-cake, said second fluid having a level of salinity which is lower than the level of salinity of said aqueous base fluid such that said polymer chains in said filter-cake adopt an extended conformation, thereby increasing the permeability of said filter-cake.

29. A method as claimed in claim 28, which comprises drilling a well using a drilling fluid as claimed in any one of claims 1 to 27; once drilling is completed, displacing the drilling fluid by a completion fluid having a similar level of salinity; installing finishing hardware; and subsequently bringing a second fluid into contact with the filter-cake, said second fluid having a level of salinity which is lower than the level of salinity of said aqueous base fluid such that said polymer chains in said filter-cake adopt an extended conformation, thereby increasing the permeability of said filter-cake.

30. A method as claimed in either claim 28 or claim 29, in which said second fluid is injected seawater or produced water.

31. A method as claimed in any one of claims 28 to 30, in which the content of salts in the second fluid is at least 4% by weight lower in dissolved salt content than the aqueous base fluid of the wellbore fluid.

32. A wellbore fluid as claimed in any one of claims 28 to 31, in which the concentration of salt(s) in the aqueous base fluid of the wellbore fluid is at least twice the concentration of salts in the second fluid.

33. A method as claimed in any one of claims 28 to 32, in which said second fluid contains less than 6% by weight of dissolved salts.
